# EUROPEAN PATENT APPLICATION

(11) **EP 4 679 076 A1**
(43) Date of publication of application: **14.01.2026**
(21) Application number: 24766929.4
(22) Date of filing: 26.02.2024
(51) Int. Cl.: G01N 27/409, G01N 27/416, H10N 97/00

(54) **THIN FILM DEVICE AND METHOD FOR MANUFACTURING SAME**

(30) Priority: 03.03.2023 JP 2023033012
(71) Applicant: Mitsui Kinzoku Company, Limited, Tokyo (JP)
(72) Inventor: MATSUO, Haruki, Ageo-shi, Saitama 362-0021 (JP); IDE, Shingo, Ageo-shi, Saitama 362-0021 (JP)
(74) Representative: Novagraaf Technologies
(86) International application number: PCT/JP2024/006860
(87) International publication number: WO 2024/185558

(57) **Abstract**

A method for fabricating a thin film device 10. The method includes steps of (a) forming a structure 90 by forming a laminate structure above a substrate 11 and (b) removing an unnecessary portion from the structure 90 to form a bridge structure 20. The laminate structure includes a first electrode layer 31, a ceramic layer 50, a second electrode layer 41, a third insulating layer 123, and a heater layer 61 in the order described. The bridge structure 20 includes a stage 21 supporting the laminate structure and at least one bridge 22 extending from the periphery of the stage 21.

## Description

### Technical Field

The present invention relates to a thin film device and a method for fabricating the same.

### Background Art

Goal 11 of the SDGs is to make cities and human settlements inclusive, safe, resilient, and sustainable, and MEMS devices are expected to contribute to achieving this goal because of their low power consumption and space savings. One type of known MEMS devices is a sensor that uses a solid electrolyte with high ionic conductivity.

For example, patent literature 1 listed below discloses a solid electrolyte gas sensor that includes a substrate, a support diaphragm, a solid electrolyte thin film formed on the support diaphragm, and arms connecting the substrate and the support diaphragm. The support diaphragm has a heating element formed thereon or therein.

Patent literature 2 discloses a structure including a silicon substrate and a diaphragm composed of a SiO₂ layer and the like. The structure has a bridge structure with four bridges formed by removing a part of the diaphragm. A pair of electrodes and a heater are formed on the same plane on the stage in the center of the bridge structure.

### Citation List

### Patent Literature:

Patent literature 1: JP 2001-056313A
Patent literature 2: JP 2007-132762A

### Summary of Invention

The thin film devices having electrodes and a heater on the same plane like those described in patent literature 1 and 2 cannot be used in high-precision gas sensors. On the other hand, in devices in which a heater layer is placed on the substrate, and an electrode layer and a solid electrolyte layer are disposed on the heater layer, a level difference due to the thickness of the heater layer is created in the electrode layer and the solid electrolyte layer. As a result, a crack caused by the level difference tends to occur in the electrode layer or the solid electrolyte layer.

Accordingly, an object of the present invention is to provide a thin film device in which the solid electrolyte layer and the electrode layer are prevented from cracking and a method for manufacturing the same.

The present invention provides a method for fabricating a thin film device, comprising
- a step of forming a structure by forming a laminate structure above a substrate, the laminate structure comprising a first electrode layer, a ceramic layer, a second electrode layer, an insulating layer, and a heater layer in the order described, and
- a step of forming a bridge structure by removing an unnecessary portion from the structure, the bridge structure comprising a stage supporting the laminate structure and at least one bridge extending from the periphery of the stage.

The present invention also provides a thin film device comprising a bridge structure,
the bridge structure comprising a stage and at least one bridge extending from the periphery of the stage, and
the thin film device further comprising a first electrode layer, a ceramic layer, a second electrode layer, an insulating layer, and a heater layer formed in the order described above the stage.

### Brief Description of Drawings

[Fig. 1] Figure 1 is a schematic perspective view of a thin film device according to a preferred embodiment of the invention.
[Fig. 2] Figure 2 is a cross-sectional view of the thin film device of Fig. 1, taken along line I-I.
[Fig. 3] Figure 3 is an exploded perspective view of the thin film device of Fig. 1.
[Fig. 4] Figure 4 is a cross-sectional view of the thin film device of Fig. 1, taken along line II-II.
[Fig. 5] Figure 5 is a cross-sectional view of a thin film device according to another embodiment of the invention.
[Fig. 6] Figure 6 is a schematic perspective view of a thin film device according to still another embodiment of the invention.
[Fig. 7] Figure 7 is a cross-sectional view of the thin film device of Fig. 6, taken along line III-III.
[Fig. 8] Figure 8 is a cross-sectional view equivalent to Fig. 4 of the thin film device of Fig 6, taken along line IV-IV.
[Fig. 9] Figure 9 is a cross-sectional view of the thin film device of Fig. 6, taken along line V-V.
[Fig. 10] Figure 10(a), Figure 10(b), Figure 10(c), Figure 10(d), Figure 10(e), Figure 10(f), Figure 10(g), Figure 10(h), and Figure 10(i) are perspective views schematically illustrating a preferred method for producing the thin film device of Fig. 1.

### Description of Embodiments

The present invention will be described on the basis of its preferred embodiments with reference to the accompanying drawings. The thin film device of the invention is suitable as a gas sensor, preferably as an oxygen gas sensor.

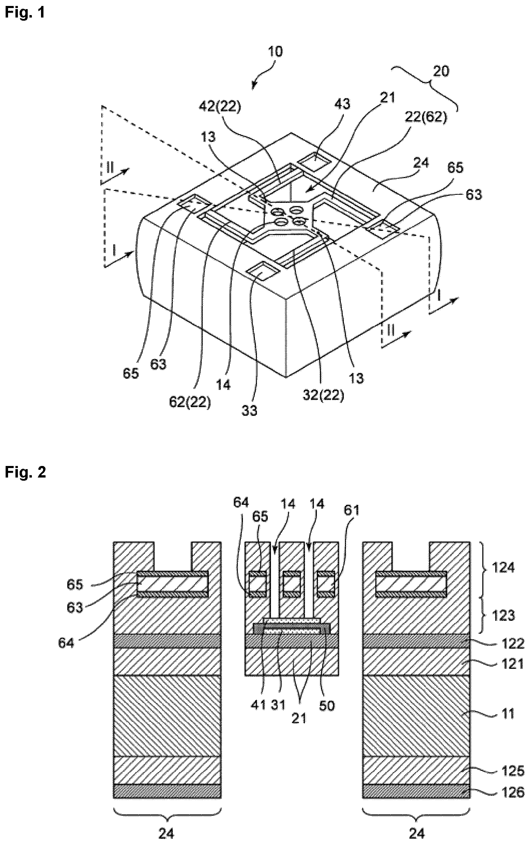

Figs. 1 through 4 illustrate a preferred embodiment of the thin film device of the invention. A thin film device 10, hereinafter simply "the device 10", of the embodiment includes a bridge structure 20. The bridge structure 20 includes a stage 21 and at least one bridge 22 extending from the periphery of the stage 21. The bridge structure 20 of the device 10 of Fig. 1 has a cuboid stage 21 and four bridges 22 extending outward from the peripheral edge of the stage 21.

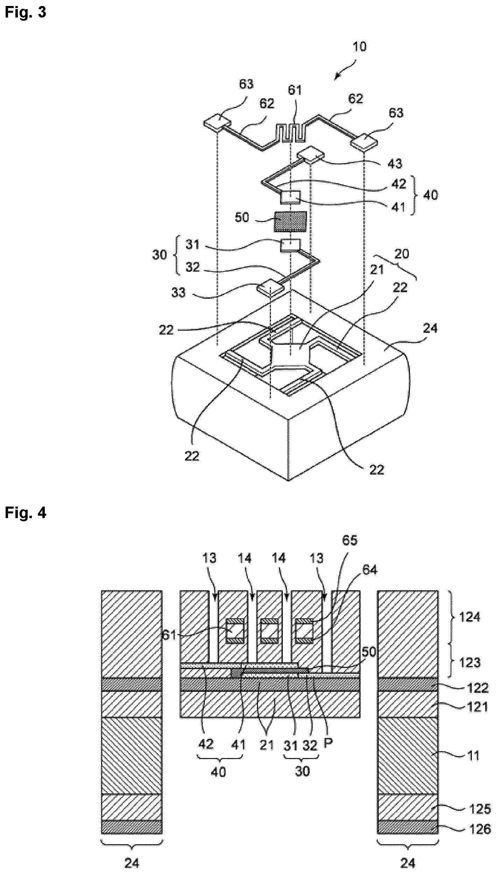

As illustrated in Figs. 2 and 3, the stage 21 has a first electrode layer 31, a ceramic layer 50, a second electrode layer 41, a third insulating layer 123, and a heater layer 61 deposited thereon in the order described.

The first electrode layer 31 and the ceramic layer 50 are typically in direct contact with each other over their entire facing area. As long as the object of the invention is accomplished, direct contact between these layers may be limited to part of their facing area, or a different layer may be present between them. Similarly, the second electrode layer 41 and the ceramic layer 50 are typically in direct contact with each other across their entire facing area. As long as the object of the invention is achieved, direct contact between these layers may be limited to part of their facing area, or a different layer may be present between them.

Owing to the placement of the heater layer 61 above the first electrode layer 31, ceramic layer 50, and second electrode layer 41, the device 10 does not involve a level difference due to the thickness of the heater layer. Consequently, cracking initiated from such a level difference hardly occurs in the first electrode layer 31, ceramic layer 50, and the second electrode layer 41.

The stage 21 preferably contains a silicon compound. The silicon compound includes silicon dioxide (SiO₂) and silicon nitride (SiNₓ, where x is a number of from 0.100 to 1.667). In order to secure sufficient physical strength to maintain the integrity of the bridge structure 20 and reduce the thermal capacity thereby to prevent an increase in power consumption of the device 10, the thickness of the stage 21 is preferably 50 to 20,000 nm, more preferably 100 to 10,000 nm, and even more preferably 200 to 8,000 nm.

As illustrated in Fig. 2, the stage 21 has a two-layer structure composed of a first insulating layer 121 as a lower layer and a second insulating layer 122 as an upper layer. When the stage 21 has such a two-layer structure, the first insulating layer 121 preferably has a thickness of 50 to 20,000 nm, more preferably 100 to 10,000 nm, and even more preferably 200 to 8,000 nm, and the second insulating layer 122 preferably has a thickness of 50 to 20,000 nm, more preferably 100 to 10,000 nm, and even more preferably 200 to 8,000 nm.

The details of the first insulating layer 121 and second insulating layer 122 will be described later.

The first electrode layer 31 is located below the ceramic layer 50 and in contact with the stage 21 and the ceramic layer 50.

The first electrode layer 31 preferably contains at least one noble metal element selected from platinum-group elements (i.e., platinum, palladium, rhodium, ruthenium, iridium, or osmium), gold, and alloys of these elements. It is also preferred for the first electrode layer 31 to contain an ion-conductive metal oxide, hereinafter simply "metal oxide". Particularly preferably, the first electrode layer 31 is a porous composite of a metal oxide and the noble metal element, especially a cermet. The first electrode layer 31 made of this composition exhibits improved thermal resistance and is prevented from increasing in density when heated. As a result, the pores formed in the first electrode layer 31 are easily retained. The advantage of pore formation in the first electrode layer 31 will be explained later.

Examples of the noble metal alloys include those commonly used, such as Pt-Rh, Au-Pt, and Au-Pd. Examples of the metal oxide include those described below as a metal oxide contained in the ceramic layer.

In order to increase the amount of gas diffusing in the first electrode layer thereby to raise the S/N ratio when the device 10 is used as a gas sensor, the thickness of the first electrode layer 31 is preferably 10 to 2,000 nm, more preferably 20 to 1,600 nm, and even more preferably 30 to 1,200 nm.

The first electrode layer 31 preferably has a plan-view shape with a circular or polygonal portion. This shape alleviates stress concentration in the stack of the first electrode layer 31 and the ceramic layer 50, thereby providing the device 10 with fewer defects.

The plan-view shape of the polygonal portion can be quadrilateral, pentagonal, or higher-order polygonal. When the first electrode layer 31 has a polygonal portion, the corners desirably have an arc curvature so as to make the above-mentioned advantage more pronounced. The first electrode layer 31 may have an oval plan-view shape instead of a circular or polygonal shape or a combination of these shapes.

The second electrode layer 41 is located above the ceramic layer 50 and is in contact with the ceramic layer 50 and the third insulating layer 123. Unless otherwise noted, the description given above about the first electrode layer 31 applies to the second electrode layer 41.

The composition of the second electrode layer 41 may be of general-purpose electrode materials, including metal electrode materials and graphite. Alternatively, it may be a porous composite of a metal oxide and a metal, particularly a cermet, similarly to the first electrode layer 31.

The second electrode layer 41 preferably has a thickness of 10 to 1,000 nm, more preferably 20 to 700 nm, in terms of sufficiently increasing the rate of emission of gas generated in the second electrode layer.

The ceramic layer 50 is located between and in contact with the first electrode layer 31 and the second electrode layer 41. The ceramic layer 50 preferably exhibits ion conductivity. When the device 10 is used as a gas sensor, particularly an oxygen gas sensor, the ceramic layer 50 preferably has oxide ion conductivity.

The ceramic layer 50 preferably contains a semiconductor, an ion conductor, or a solid electrolyte.

The semiconductor may be, for example, one or more of tin (II) oxide and zinc oxide.

The ion conductor preferably has high electronic conductivity. An exemplary ion conductor is M¹M²O_{3-c}, where M¹ is at least one of lanthanum and strontium; M² is at least one of cobalt, iron, and nickel; and c is a number of from -0.5 to 0.5.

The solid electrolyte preferably contains a compound composed of M³, M⁴, and O. When this compound is used, the oxide ion conductivity of the solid electrolyte is further enhanced. M³ is at least one element selected from the group consisting of La, Ce, Pr, Nd, Pm, Sm, Eu, Gd, Tb, Dy, Ho, Er, Yb, Lu, Be, Mg, Ca, Sr, Y, Ba, and Bi. M⁴ is at least one element selected from the group consisting of Mg, Al, Sc, Ti, V, Cr, Mn, Fe, Co, Ni, Ga, Zr, Ta, Nb, B, Si, Ge, Zn, Sn, W, and Mo. The compound preferably has an apatite crystal structure.

To further improve the oxide ion conductivity, the solid electrolyte more preferably contains a complex oxide represented by formula (1): M³_{9.33+x}[T_{6.00-y}M⁴_{y}]O_{26.0+z}, where M³ is as defined above, i.e., at least one element selected from the group consisting of La, Ce, Pr, Nd, Pm, Sm, Eu, Gd, Tb, Dy, Ho, Er, Yb, Lu, Be, Mg, Ca, Sr, Y, Ba, and Bi; T is at least one of Si and Ge; M⁴ is at least one element selected from the group consisting of Mg, Al, Sc, Ti, V, Cr, Mn, Fe, Co, Ni, Ga, Zr, Ta, Nb, B, Zn, Sn, W, and Mo; x is a number of from -1.33 to 1.50; y is a number of from 0.00 to 3.00; and z is a number of from -5.00 to 5.20. The M³ to T mole ratio ranges from 1.33 to 3.61. The complex oxide preferably has an apatite crystal structure.

The solid electrolyte containing the complex oxide of formula (1) where M³ is lanthanum, i.e., La_{9.33+x}[T_{6.00-y}M⁴_{y}]O_{26.0+z}, is particularly preferred in terms of even more improved oxide ion conductivity. Examples of the complex oxide La_{9.33+x}[T_{6.00-y}M⁴_{y}]O_{26.0+z} include La_{9.33+x}(Si_{5.30}B_{0.70})O_{26.0+z}, La_{0.33+x}(Si_{4.70}B_{1.30})O_{26.0+z}, La_{9.33+x}(Si_{4.70}Ge_{1.30})O_{26.0+z}, La_{9.33+x}(Si_{4.70}Zn_{1.30})O_{26.0+z}, La_{9.33+x}(Si_{4.70}W_{1.30})O_{26.0+z}, La_{9.33+x}(Si_{4.70}Sn_{1.30})O_{26.0+z}, and La_{9.33+x}(Ge_{4.70}B_{1.30})O_{26.0+z}. Among the complex oxides of formula (1) particularly preferred are those in which M³ is lanthanum and T is silicon, namely complex oxides containing lanthanum and silicon. The complex oxide of formula (1) can be prepared in accordance with the method described in WO 2016/111110.

In order to enhance the oxide ion conductivity of the ceramic layer 50, it is also preferred that the solid electrolyte contains not only the complex oxide containing lanthanum and silicon but also at least one metal oxide selected from the group consisting of yttrium-stabilized zirconia (YSZ), samarium-doped ceria (SDC), gadolinium-doped ceria (GDC), lanthanum gallate, and yttrium-doped bismuth oxide (YBO). These metal oxides are chemically stable, and in particular, when the thin film device 10 of the present invention is used as a limiting-current oxygen sensor, oxygen vacancies are less likely to be formed, thereby to prevent deterioration of the ceramic layer 50.

YSZ preferably has a mole ratio of yttrium (Y) to the sum of zirconium (Zr) and yttrium, Y/(Zr + Y), of 0.05 to 0.15. SDC preferably has a mole ratio of samarium (Sm) to the sum of cerium (Ce) and samarium, Sm/(Ce + Sm), of 0.10 to 0.25. GDC preferably has a mole ratio of gadolinium (Gd) to the sum of cerium (Ce) and gadolinium, Gd/(Ce + Gd), of 0.10 to 0.25. YBO preferably has a mole ratio of yttrium (Y) to the sum of bismuth (Bi) and yttrium (Y), Y/(Bi + Y), of 0.10 to 0.30.

The ceramic layer may contain one or more of the above-recited materials. When two or more materials are used, they may be used as stacked or mixed together.

*Inter alia,* the ceramic layer 50 is preferably formed of a solid electrolyte. That is, the ceramic layer 50 is preferably a solid electrolyte layer.

The thickness of the part of the ceramic layer 50 that completely overlaps the first electrode layer 31 and the second electrode layer 41 in plan view is typically, but is not limited to, 10 to 1,000 nm.

The heater layer 61 is located above the second electrode layer 41 with a third insulating layer 123 between them.

The heater layer 61 is capable of generating heat, which heats the ceramic layer 50 and increases the ionic and electronic conductivity of the ceramic layer 50.

The heater layer 61 contains a heat-generating material, such as metal. On applying current to the metal-containing heater layer 61, Joule heat is generated, which heats the heater layer 61. Materials for the heater layer include, but are not limited to, platinum, platinum alloys, tungsten, molybdenum, nickel alloys, titanium nitride, titanium, polycrystalline silicon, and tin indium oxide.

The heater layer 61 is preferably formed by a single strand extending in a serpentine pattern, alternating in two opposite directions, as illustrated in Fig. 3. In this description, the term "heater layer 61" refers to the part of the strand that completely overlaps the stage 21 in plan view, and the part of the strand that does not overlap the stage 21 in plan view will be referred to as "heater wire 62". That is, the strand forms two wires 62 in its opposite end portions as well as the heater layer 61 that serpentines repeatedly in two opposite directions between the wires 62.

Each heater wire 62 connects to the heater layer 61 at one end and to a wire bonding pad 63 or simply a heater pad 63 at the other end. In other words, the heater pads 63 connect to the heater layer 61 through the respective wires 62.

By the serpentine configuration of the heater layer 61, the heater layer 61 has increased resistance compared with the heater wire 62 even when they are made of the same material. From this point of view, the strand preferably extends without self-intersecting.

The heater wires 62 are located in the respective bridges 22.

The heater layer 61 can be configured in ways other than the above-mentioned serpentine configuration. For instance, the single strand may not be serpentine. In either configuration, it is preferred that the resistance of the heater layer 61 be higher than that of the wires 62.

From a production cost perspective, the heater layer 61, heater wires 62, and heater pads 63 are preferably made of the same material.

In the device 10 shown in Figs. 1 to 4, the heater pads 63 are placed in a peripheral portion 24 of the device 10, which will be described later.

The heater layer 61 preferably has a thickness of 20 to 2,000 nm, more preferably 30 to 1,500 nm, and even more preferably 50 to 1,000 nm. With a thickness of 20 nm or greater, the heater layer 61 has increased resistance to generate sufficient heat with relatively low voltage thereby reducing the device's power consumption. Additionally, the heater layer 61 with that thickness exhibits sufficiently increased durability against breaking. Using the heater layer 61 with a thickness of 2,000 nm or less reduces production costs.

To properly adjust the resistance of the heater layer 61, the heater layer 61 preferably has a minimum cross-sectional area of 1 to 200 µm², more preferably 1.5 to 150 µm², and even more preferably 2 to 100 µm². As used herein, the term "minimum cross-sectional area" refers to the smallest area of the cross-sections perpendicular to the current direction in the heater layer 61.

The device 10 preferably includes a fourth insulating layer 124 formed above and around the heater layer 61. The fourth insulating layer 124 protects the heater layer 61 from reacting with the surrounding gas thereby prolonging the service life of the heater layer 61.

To enhance the adhesion between the heater layer 61 and each of the third insulating layer 123 and the fourth insulating layer 124, it is preferred to dispose a first adhesion layer 64 and a second adhesion layer 65 in contact with the lower and upper surfaces, respectively, of the heater layer 61. To ensure the adhesion, the first and second adhesion layers 64 and 65 preferably contain at least one of tantalum, titanium, titanium nitride, titanium oxide, titanium oxynitride, tantalum oxide, zirconium, zirconium oxide, yttrium, yttrium oxide, tungsten, tungsten oxide, chromium, chromium oxide, nickel, and nickel oxide, and alloys thereof.
When the first adhesion layer 64 and the second adhesion layer 65 are provided in contact with the lower and upper surfaces, respectively, of the heater layer 61, it is preferred that these adhesion layers be also disposed in contact with the lower and upper surfaces of the heater wires 62 and the heater pads 63.

In view of sufficient adhesion between the heater layer 61 and the third and fourth insulating layers 123 and 124, the first and second adhesion layers 64 and 65 each preferably have a thickness of 1 to 200 nm, more preferably 2 to 150 nm, and even more preferably 10 to 100 nm.

The thicknesses of the layers described above can be measured using a stylus profiler, an electron microscope, or a 3D optical profiler.

In conventional thin film devices, if the linear expansion coefficient differs largely among the electrode layers, ceramic layer, and insulating layers, cracking is likely to occur in the electrode layers and ceramic layer during a heat treating process in the device manufacturing. In contrast, since the device 10 of the present embodiment has no level differences in each of the first electrode layer 31, ceramic layer 50, and second electrode layer 41 in the thickness direction, the likelihood of crack formation is reduced, even in the presence of differing linear expansion coefficients among the first electrode layer 31, ceramic layer 50, second electrode layer 41, and third insulating layer 123 Consequently, the configuration of the device 10 of the embodiment provides wider freedom in selecting materials of the first electrode layer 31, ceramic layer 50, second electrode layer 41, and third insulating layer 123.

As illustrated in Fig. 1, the device 10 preferably includes a peripheral portion 24 that surrounds the stage 21 with space from the stage 21 in plan view. When the device 10 has the peripheral portion 24, it is preferred that the stage 21 and the peripheral portion 24 are not in direct contact with each other but are instead connected to each other by the bridges 22.

The peripheral portion 24 preferably includes a substrate 11 and a plurality of insulating layers on each of the upper and lower sides of the substrate 11. Specifically, as shown in Fig. 2, the substrate 11 has the first insulating layer 121, the second insulating layer 122, the third insulating layer 123, and the fourth insulating layer 124 deposited in that order on the upper side thereof and a fifth insulating layer 125 and a sixth insulating layer 126 placed in that order on the lower side thereof.

The substrate 11 preferably contains silicon.

The insulating layers formed on the upper and lower sides of the substrate 11 preferably contain a silicon compound, more preferably silicon dioxide (SiO₂) or silicon nitride (SiNₓ, where x is from 0.100 to 1.667) in terms of availability, ease of film deposition, and chemical stability. Specifically, the first insulating layer 121, third insulating layer 123, fourth insulating layer 124, and fifth insulating layer 125 are preferably formed of SiO₂, and the second and the sixth insulating layer 122 and 126 are preferably formed of SiNₓ.

The device 10 may or may not have the fifth and sixth insulating layers. The presence or absence of these insulating layers can adjust the stresses applied to the substrate 11.

The device 10 preferably includes at least one first wire 32 extending from the periphery of the first electrode layer 31. The first electrode layer 31 is preferably connected to a wire bonding pad 33 via the first wire 32. The wire bonding pad 33 connected to the first electrode layer 31 will be referred to as the "first electrode pad 33".

Similarly, the device 10 preferably includes at least one second wire 42 extending from the periphery of the second electrode layer 41. The second electrode layer 41 is preferably connected to a wire bonding pad 43 via the second wire 42. The wire bonding pad 43 connected to the second electrode layer 41 will be referred to as the "second electrode pad 43".

The first wire 32 and second wire 42 are located in the respective bridges 22. The structure composed of the first electrode layer 31 and the at least one first wire 32 extending from the periphery of the first electrode layer 31 are inclusively referred to as a first electrode structure 30, and the structure composed of the second electrode layer 41 and the at least one second wire 42 extending from the periphery of the second electrode layer 41 are inclusively referred to as a second electrode structure 40.

When the first electrode layer 31 and the first wire 32 are made of the same material, the boundary between them is not necessarily clear. Hence, as illustrated in Fig. 4, the portion of the first electrode structure 30 that overlaps the second electrode structure 40 in plan view is called the first electrode layer 31. The rest is called the first wire 32. Similarly, the portion of the second electrode structure 40 that overlaps the first electrode structure 30 in plan view is called the second electrode layer 41, and the rest is called the second wire 42.

As illustrated in Fig. 3, the first electrode layer 31 is connected to the first electrode pad 33 via one first wire 32 extending from the periphery of the first electrode layer 31, and the second electrode layer 41 is connected to the second electrode pad 43 via one second wire 42 extending from the periphery of the second electrode layer 41. The first and second electrode pads 33 and 43 are located in the peripheral portion 24 as shown in Fig. 1. A part of the upper side of each of the first and second electrode pads 33 and 43 is exposed by removing the respective corresponding parts of the third and fourth insulating layers 123 and 124.

From the production cost perspective, all the first electrode layer 31, first wire 32, and first electrode pad 33 are preferably formed of the same material. Similarly, all the second electrode layer 41, second wire 42, and second electrode pad 43 are preferably formed of the same material.

Unlike the conventional thin film devices, the device 10 of the embodiment has the heater layer 61 located above the first electrode layer 31, first wire 32, second electrode layer 41, and second wire 42. Therefore, the first electrode layer 31, first wire 32, second electrode layer 41, and second wire 42 do not experience level differences that might have occurred due to the thickness of the heater layer 61. As a result, a crack caused by a level difference is prevented in not only the first electrode layer 31 and second electrode layer 41 but also the first wire 32 and second wire 42.

The thin film device of the present invention can be used as a gas sensor with either the first or second electrode layer acting as a cathode and the other as an anode. It is particularly suited for use as a limiting-current gas sensor. For instance, in using the device 10 of the embodiment as an oxygen gas sensor, the first electrode layer 31 is used as the cathode, and the second electrode layer 41 as the anode.

When the device 10 is used as a gas sensor, an analyte gas to be detected must reach the cathode or anode, depending on the type of the gas. The following is an example of how an analyte gas is caused to reach the cathode.

The device 10 has the first electrode structure 30 and the second electrode structure 40. One of the first and second electrode structures, 30 and 40, is preferably formed of a porous material at least in part thereof. Here, the "one of the first and second electrode structures" refers to the electrode structure containing the cathode. With this device configuration, the electrode structure including the cathode has pores, which allow the analyte gas to diffuse within the electrode structure. Thus, the gas is incorporated into the first or second wire 32 or 42 and passes through the first or second wire 32 or 42, reaching the cathode. The rate of gas diffusion through the one of the electrode structures can be adjusted by selecting the porous material. Therefore, the flow rate of the gas to the cathode can be adjusted easily. This is advantageous when the device 10 is used as a limiting-current gas sensor.

To further ensure the above-described effect and advantage, it is preferable that the one of the electrode structures be entirely formed of a porous material. The porous material preferably has an open cell structure.

To properly adjust the gas flow rate to the cathode, it is preferred that the one of the electrode structures (i.e, the electrode structure containing the cathode) contain a metal oxide and have a porosity ρ₀ of 1.0% to 50%, more preferably 5.0% to 45%, and even more preferably 15.0% to 40%. The details of the "metal oxide" are as described above.

For the one of the electrode structures to have a porosity ρ₀ within the above range, the proportion of the metal oxide in the one of the electrode structures preferably ranges from 1.0 vol% to 60 vol%, more preferably from 2.0 vol% to 55 vol%.

The porosity of the electrode structure is measured as follows. An SEM image of the electrode structure is binarized. The total area of the binarized regions corresponding to pores is obtained, and the ratio of the total pore area to the electrode structure area in the image is calculated. The ratio is defined to be the porosity.

The path that an analyte gas in air takes from entering the first or second wire, 32 or 42, to reaching the cathode (the first or second electrode layer 31 or 41) is referred to as a "gas diffusion path P". One or more gas diffusion paths P may be formed in one of the first and second electrode structures 30 and 40.

In the device 10 shown in Fig. 4, the first electrode structure 30 has a single gas diffusion path P. The third and fourth insulating layers 123 and 124 formed above the first wire 32 have a first air vent 13, which exposes part of the first wire 32 and allows a gas present in air to enter the first wire 32. The incorporated gas then reaches the first electrode layer 31 (i.e., the cathode) through the gas diffusion path P in the first wire 32. Alternatively, the first air vent 13 may not be formed through the third and fourth insulating layers 123 and 124. In this case, the gas enters through the first electrode pad 33 and reaches the first electrode layer 31 (i.e., the cathode) through the gas diffusion path P of the first wire 32. Note that the gas diffusion path P is preferably short because the gas movement in the gas diffusion path P is relatively slow. For this reason, forming the first air vent 13 through the third and fourth insulating layers 123 and 124 is recommended.

The configuration in which one of the first and second electrode structures 30 and 40 has a plurality of gas diffusion paths P includes an unshown configuration in which a plurality of first wires 32 extend from the periphery of the first electrode layer 31 and another unshown configuration in which the single first wire 32 extending from the periphery of the first electrode layer 31 is branched into a plurality of first wires. In either configuration, it is preferred that, among the ends of the first wires 32 that are not connected to the first electrode layer 31, one be connected to the first electrode pad 33, and the others not be connected.

On reaching the cathode, the gas undergoes reactions dependent on its type at the cathode and anode. For instance, when the device 10 is used as a limiting-current oxygen gas sensor, the following reactions occur:

Cathode: O₂ + 4e- → 2O²⁻

Anode: 2O²⁻ → O₂ + 4e⁻

In the configuration in which one of the first and second electrode structures 30 and 40 has only one gas diffusion path P, the minimum cross-sectional area of that electrode structure, taken perpendicular to the gas diffusion direction of the gas diffusion path P, is designated Sr, and the plan-view area of the overlap between the first electrode layer 31 and the second electrode layer 41 is designated Sp. The ratio of Sr to Sp is preferably 1.0 × 10⁻⁷ to 6.9 × 10⁻⁴. When the Sr/Sp ratio is 1.0 × 10⁻⁷ or greater, the gas is supplied to the cathode at a sufficient rate for the reaction rate in the electrode layers, thereby improving the S/N ratio of the gas sensor. With the Sr/Sp ratio being 6.9 × 10⁻⁴ or smaller, limiting-current is generated without applying excessive voltage. This reduces the power consumption and minimizes the deterioration of the first and second electrode layers 31 and 41 and the ceramic layer 50.

From the standpoint of ensuring the abovementioned advantages, the Sr/Sp ratio more preferably ranges from 1.0 × 10⁻⁶ to 6.0 × 10⁻⁴.

From the same standpoint, when one of the first and second electrode structures 30 and 40 has a plurality of gas diffusion paths P, the sum of the above-defined minimum cross-sectional areas Sr of that electrode structure, taken perpendicular to the gas diffusion direction of each gas diffusion path P, is designated ΣSr. The ratio of ΣSr to Sp, ΣSr/Sp, is preferably 1.0 × 10⁻⁷ to 6.9 × 10⁻⁴ and more preferably 1.0 × 10⁻⁶ to 6.0 × 10⁻⁴.

The cross-sectional shape of the gas diffusion path P, taken at a position with the minimum cross-sectional area Sr along the thickness direction of the path P, is preferably trapezoidal or rectangular for ease of making the first or second electrode structure 30 or 40. The cross-sectional shape of the gas diffusion path P, taken at the position with the minimum cross-sectional area Sr along the thickness direction of the path P, can be observed with an electron microscope. The Sr is calculated based on the resulting microscope image using a known method. For example, when the cross-sectional shape is trapezoidal, the trapezoid is divided into four triangles, and the areas of the triangles are summed to give the Sr. When the cross-sectional shape is a rectangle, the Sr is obtained by drawing a rectangle enclosing the shape and subtracting the areas of the two regions outside the shape that can be approximated as triangles from the area of the enclosing rectangle.

In the case where the reaction in the anode side generates gas, the generated gas is released outside from the device 10. In the device 10 of Figs. 1 through 4, second air vents 14 are formed through the insulating layers provided above the second electrode layer 41 (anode), i.e., the third and fourth insulating layers 123 and 124, as illustrated in Fig. 2. The generated gas is released outside through the second air vents 14. When the second electrode structure 40 contains a porous material, another first air vent 13 may be formed through the insulating layers provided above the second wire 42, thereby to let out the gas. In other words, the gas generated by the reaction in the second electrode layer 41 is released through the second wire 42 toward the another first air vent 13.

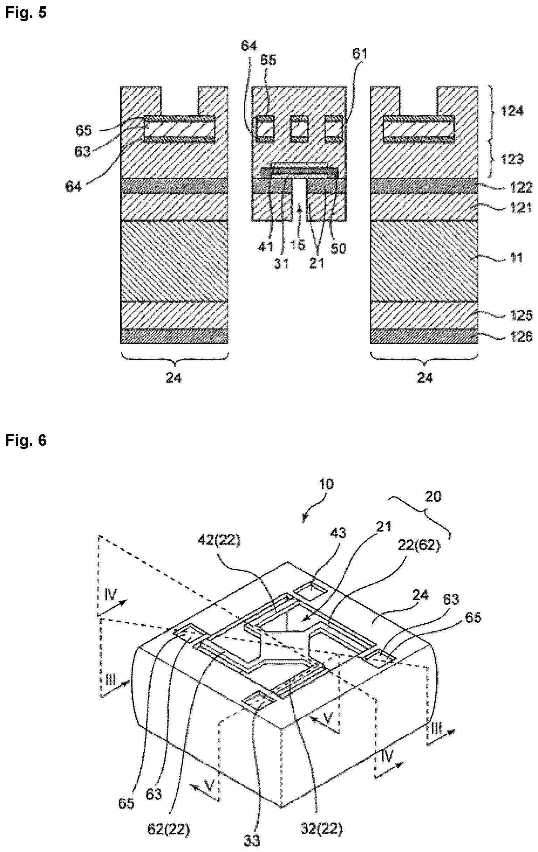

Fig. 5 displays a cross-sectional view of another embodiment of the thin film device according to the present invention. The device of this embodiment has a third air vent 15 formed through the insulating layers provided below the first electrode layer 31, i.e., the first and second insulating layers 121 and 122, instead of the second air vents 14. The device of Fig. 5 is otherwise structurally the same as the device 10 of the embodiment illustrated in Figs. 1 through 4. In the device of the embodiment of Fig. 5, the first and second electrode layers 31 and 41 are preferably used as an anode and a cathode, respectively. In this case, the gas generated by the reaction in the first electrode layer 31 is released outside through the third air vent 15.

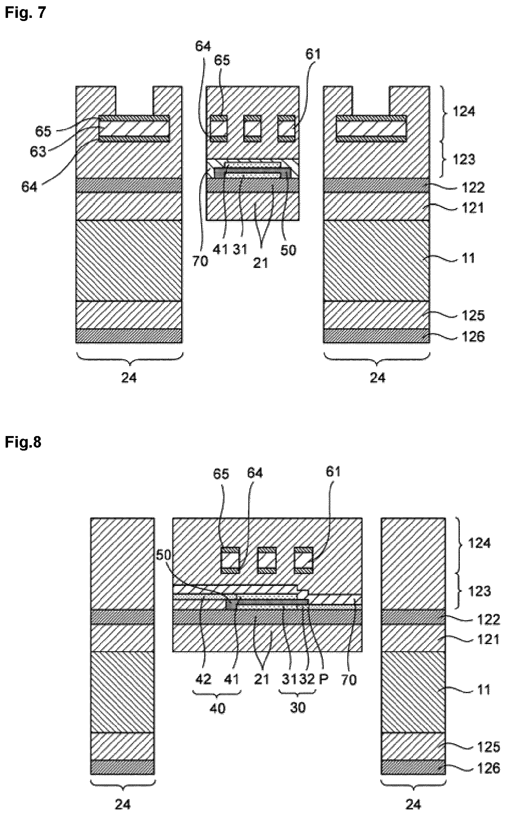

Figs. 6 through 9 show a still another embodiment of the thin film device according to the invention. As illustrated in Figs. 7 to 9, the first electrode structure 30, the second electrode structure 40, and the ceramic layer 50 are covered with a porous layer 70. The porous layer 70 covers the entire area of the first and second electrode structures 30 and 40 and also covers part of the upper side of the first and second electrode pads 33 and 43.

The insulating layers formed above the second electrode layer 41, i.e., the third and fourth insulating layers 123 and 124 are located above and in contact with the porous layer 70.

The device 10 of Figs. 6 to 9 is structurally the same as that of Figs. 1 to 4, except for the presence of the porous layer 70 and the absence of the first and second air vents 13 and 14. In this embodiment, the first and second electrode layers 31 and 41 are preferably used as a cathode and an anode, respectively.

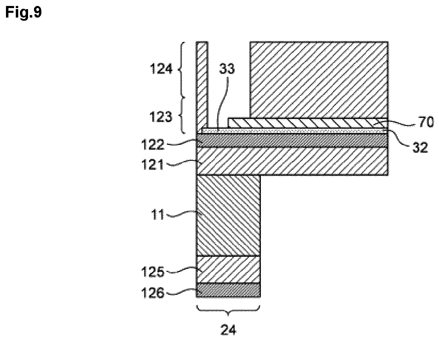

The porous layer 70 is preferably capable of diffusing an analyte gas rapidly so that, as illustrated in Figs. 8 and 9, a sample gas entering the porous layer 70 from above the first electrode pad 33, which is connected to the first electrode layer 31 via the first wire 32, can rapidly migrate toward the first electrode layer 31. Thereafter, the gas in the porous layer 70 moves into the first wire 32 and then reaches the first electrode layer 31 through the gas diffusion path P in the first wire 32.

On reaching the first electrode layer 31, the gas undergoes reactions dependent on the type of the gas in the first and second electrode layers 31 and 41. When gas is generated as a result of the reaction in the second electrode layer 41, the gas is released outside of the device through the porous layer 70.

In order to increase the gas diffusion rate in the porous layer 70, the porous layer 70 preferably has an open cell structure.

The porous layer 70 is preferably made of a material that can retain its porous structure for an extended period of time and has excellent electrical insulating properties. Examples of such materials include metal oxides, metal nitrides, metal oxynitrides, metal carbides, metal fluorides, and metal halides. Specifically, the porous layer 70 preferably contains at least one of alumina (Al₂O₃), tantalum oxide (Ta₂O₅), titanium oxide (TiO₂), yttrium oxide (Y₂O₃), niobium oxide (Nb₂O₅), molybdenum oxide (MoOs), hafnium oxide (HfO₂), tungsten oxide (WO₃), and titanium oxynitride (TiNₓO_{y}).

The thin film device of the invention is useful as a sensor for various gases. It is particularly suitable for use as a gas sensor for oxygen, carbon monoxide, carbon dioxide, ammonia, and volatile organic compounds.

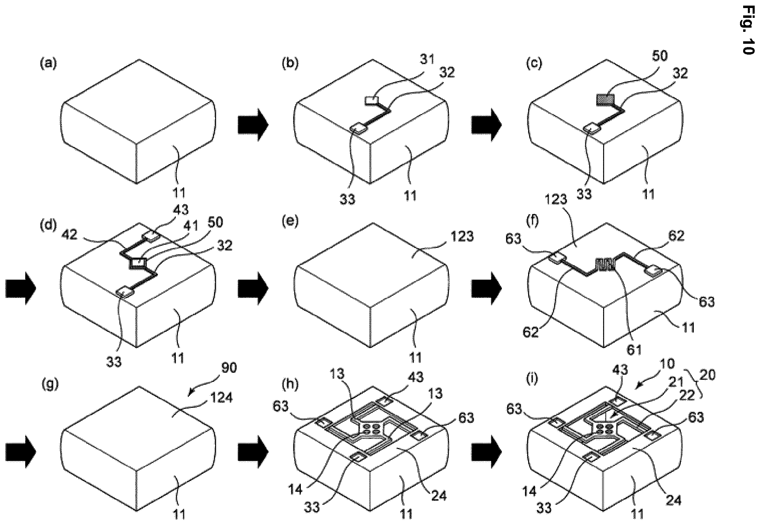

A preferred method for fabricating the thin film device of the present invention will be described with particular reference to the device 10 of Figs. 1 to 4. Figs. 10(a) through 10(i) are a preferred process flow diagram for fabricating the device 10 of Figs. 1 to 4. The method includes steps of forming a structure 90 by forming a laminate structure above a substrate 11 and form a bridge structure 20 by removing an unnecessary portion from the structure 90. The laminate structure includes a first electrode layer 31, a ceramic layer 50, a second electrode layer 41, a third insulating layer 123, and a heater layer 61 in the order described. The bridge structure 20 includes a stage 21 supporting the laminate structure and at least one bridge 22 extending from the periphery of the stage 21.

The step of forming a structure 90 includes the following successive substeps 1 to 5.
1. Substep of forming a first electrode layer 31 above a substrate 11.
2. Substep of forming a ceramic layer 50 above the first electrode layer 31.
3. Substep of forming a second electrode layer 41 above the ceramic layer 50.
4. Substep of forming a third insulating layer 123 above the second electrode layer 41.
5. Substep of forming a heater layer 61 above the third insulating layer 123.

The substeps 1 to 5 will be described in sequence.

### 1. Substep of forming first electrode layer 31 on substrate 11

Prior to the formation of the first electrode layer 31, the substrate 11 is thermally oxidized by heating at 700° to 1400°C in an atmosphere containing oxygen or water vapor to form a first insulating layer 121 and a fifth insulating layer 125, both composed of SiO₂, on its surface. Thereafter, a second insulating layer 122 and a sixth insulating layer 126 both composed of SiNₓ are formed on the first insulating layer 121 and the fifth insulating layer 125, respectively, by means of a thin-film deposition process described below.

The thin-film deposition process includes physical vapor deposition (PVD), such as vacuum deposition, sputtering, and ion plating; and chemical vapor deposition (CVD). Specifically, the second insulating layer 122 and the sixth insulating layer 126 are preferably formed by plasma-enhanced chemical vapor deposition (PECVD) or low-pressure chemical vapor deposition (LPCVD) in terms of residual stress adjustability and mass productivity. Note that the first, second, fifth, and sixth insulating layers 121, 122, 125, and 126 are omitted from Figs. 10(a) to 10(i).

A first electrode layer 31 is then provided above the substrate 11. In this method, the first electrode layer 31, first wire 32, and first electrode pad 33 are deposited simultaneously to simplify the process (see Figs. 10(a) and 10(b)). The first electrode layer 31, first wire 32, and first electrode pad 33 can be formed by a lift-off patterning process. Specifically, a photoresist layer (not shown) is provided over the entire second insulating layer 122 of the substrate 11, followed by exposure to light and subsequent development, leaving a mask (unshown) complementary to a desired pattern for the first electrode layer 31, first wire 32, and first electrode pad 33. The first electrode layer 31 is then deposited by a thin-film deposition process with the mask on the substrate 11. Finally, the photoresist layer mask is removed, leaving behind the first electrode layer 31, first wire 32, and first electrode pad 33 in the desired pattern as shown in Fig. 10(b).

The thin-film deposition processes described above can be used to deposit the first electrode layer 31, first wire 32, and first electrode pad 33. Among them, sputtering is preferred for its high mass productivity and the ease with which it can form the first electrode layer 31, first wire 32, and first electrode pad 33 with a co-continuous structure, in which ion-conductive metal oxide is integrated with platinum.

When sputtering is used, a platinum or similar target and an ion-conductive metal oxide target can be used to form the first electrode layer 31, first wire 32, and first electrode pad 33 composed of platinum or a similar material and an ion-conductive metal oxide. The porosity of the first electrode layer 31, first wire 32, and first electrode pad 33 can be controlled by adjusting the gas pressure during sputtering. For example, increasing the gas pressure can increase the porosity. The ratio of platinum or a similar material and the ion-conductive metal oxide in the first electrode layer 31, first wire 32, and first electrode pad 33 can be adjusted by setting the power supplied to the targets appropriately during sputtering.

### 2. Substep of forming ceramic layer 50 above first electrode layer 31

The ceramic layer 50 is deposited on the side of the first electrode layer 31 facing away from the substrate 11 (see Fig. 10(c)). The ceramic layer 50 is formed with a planar shape and size that extends beyond the periphery of the first electrode layer 31. This indicates that the ceramic layer 50 covers a portion of the first wire 32. As with the formation of the first electrode layer 31, the ceramic layer 50 is preferably formed using a combination of a lift-off process and the abovementioned thin-film deposition process. Among the recited thin-film deposition processes, sputtering is preferred in view of high mass productivity and the ease with which the ceramic layer 50 with a desired composition can be formed.

### 3. Substep of forming second electrode layer 41 above ceramic layer 50

In this method, the second electrode layer 41, second wire 42, and second electrode pad 43 are deposited simultaneously to simplify the process (see Fig. 10(d)). The second electrode layer 41, second wire 42, and second electrode pad 43 can be formed by the same processes as for the first electrode layer 31, first wire 32, and first electrode pad 33. The second electrode layer 41 is formed with a planar shape and size that does not extend from the periphery of the ceramic layer 50.

In the fabrication of the device 10 shown in Figs. 6 and 7, following the formation of the second electrode layer 41, a porous layer 70 is formed above the second electrode layer 41. The porous layer 70 can be formed in the same manner as the first electrode layer 31.

After forming the second electrode layer 41 and before forming the third insulating layer 123, the ceramic layer 50 is heat-treated to crystallize the ceramic. As the crystallization of the ceramic proceeds, the ceramic layer 50 becomes brittle and tends to crack. Therefore, the heat treatment should be performed before forming the third insulating layer 123, i.e., before the formation of the heater layer 61, to prevent cracking due to the thickness of the heater layer 61.

The heat treatment is preferably carried out at a temperature lower than the crystallization temperature of the ceramic constituting the ceramic layer. Specifically, while varying with the type of the ceramic, the heat treatment temperature is preferably 700°C or higher, more preferably 750°C or higher, even more preferably 800°C or higher, and preferably 1200°C or lower, more preferably 1100°C or lower, and even more preferably 1000°C or lower.

### 4. Substep of forming third insulating layer 123 above second electrode layer 41

The third insulating layer 123 is formed over the entire area of the substrate 11 (see Fig. 10(e)). The abovementioned thin-film deposition processes can be used to form the third insulating layer 123. When in forming the third insulating layer 123 of SiO₂, PECVD is preferred for its residual stress adjustability and high mass productivity.

### 5. Substep of forming heater layer 61 above third insulating layer 123

If necessary, the formation of the heater layer 61 is preceded by forming the first adhesion layer 64. The first adhesion layer 64 can be formed in the same manner as the first electrode layer 31.

The heater layer 61 is then deposited (see Fig. 10(f)). In this method, the heater layer 61, heater wires 62, and heater pads 63 are deposited simultaneously to simplify the process. The formation of the heater layer 61 is preferably achieved by forming a thin film over the entire area of the substrate 11 by any one of the above-described thin-film deposition processes, followed by patterning. The thin film deposition is preferably performed by sputtering from the standpoint of mass productivity.

In order to reduce the formation of flashes around the edge of the heater layer 61, the patterning is preferably carried out by milling.

Instead of milling, a lift-off process can also be used for patterning. Specifically, a photoresist layer (not shown) is provided over the entire third insulating layer 123, followed by exposure to light and subsequent development, leaving a mask (unshown) complementary to a desired pattern for the heater layer 61, heater wires 62, and heater pads 63. The heater layer 61, heater wires 62, and heater pads 63 are then deposited by a thin-film deposition process with the mask on the third insulating layer 123. Finally, the photoresist layer mask is removed, leaving the heater layer 61, heater wires 62, and heater pads 63 in the desired pattern.

If necessary, the second adhesion layer 65 is provided after the heater layer 61 is deposited. The second adhesion layer 65 can be formed in the same manner as the first adhesion layer 64. Fig. 10(f) omits the first and second adhesion layers 64 and 65.

The heater layer 61 is preferably heat-treated for stabilization. To ensure the stabilization, the heat treatment temperature is preferably at least 500°C, more preferably 600°C or higher, and even more preferably 700°C or higher. To sufficiently prevent cracking of the first electrode layer 31, first wire 32, second electrode layer 41, second wire 42, and ceramic layer 50, the heat treatment after the formation of the heater layer 61 is preferably performed at relatively low temperatures. When, in particular, the ceramic constituting the ceramic layer 50 has been crystallized by the heat treatment after forming the second electrode layer and before forming the insulating layer, the heat treatment after forming the heater layer 61 is preferably conducted at a temperature lower than the ceramic's crystallization temperature.

After forming the heater layer 61 and, if necessary, the first and second adhesion layers 64 and 65, the fourth insulating layer 124 is formed to give the structure 90 (see Fig. 10(g)). The fourth insulating layer 124 can be deposited in the same manner as the third insulating layer 123.

The structure 90 is thus designed to have no level differences created in the first electrode layer 31, ceramic layer 50, and second electrode layer 41 by forming the heater layer 61 after the first electrode layer 31, ceramic layer 50, and second electrode layer 41 are formed.

The step of forming the bridge structure 20 after obtaining the structure 90 is then described.

First, unnecessary portions of the insulating layers deposited on the upper side of the substrate 11, i.e., the first insulating layer 121, second insulating layer 122, third insulating layer 123, and fourth insulating layer 124 are removed (see Fig. 10(h)). As used herein, the term "unnecessary portions" refers to the portions that do not overlap either the bridge structure 20 or the peripheral portion 24 in plan view of the device 10.

In this step, the first air vents 13 and second air vents 14 can be formed in parallel with the removal of unnecessary portions.

Removal of the unnecessary portions can be achieved by an etching process, such as dry etching or wet etching.

Dry etching processes that can be employed include reactive ion etching (RIE) using fluorocarbon or a halogen gas. Useful wet etching processes include isotropic etching using hydrofluoric acid, nitric acid, sulfuric acid, or phosphoric acid or anisotropic etching using an alkali solution, such as potassium hydroxide, tetramethylammonium hydroxide, or ethylenediamine-pyrocatechol. Of these, RIE is preferred for the removal of unnecessary portions from the viewpoint of avoiding etching of the structure 90.

Secondly, the unnecessary portion of the insulating layers below the lower side of the substrate 11, i.e., the fifth insulating layer 125 and the sixth insulating layer 126 is removed, and thereafter the unnecessary portion of the substrate 11 is removed (Fig. 10(i)). As used herein, the term "unnecessary portion" refers to the portion that does not overlap the peripheral portion 24 in plan view.

The unnecessary portion can be removed by the same processing as for removing the insulating layers on and above the substrate 11. In particular, the removal of the unnecessary portion of the insulating layers on and below the substrate 11 is preferably performed by RIE. The removal of the unnecessary portion of the substrate 11 is preferably achieved by deep reactive ion etching (DRIE), which alternates an etching process using sulfur hexafluoride and a passivation process using a fluoroalkane gas, such as octafluorocyclobutane.

While the thin film device of the present invention and a preferred method of fabrication have been described in terms of their preferred embodiments, the invention is not deemed to be limited to these embodiments.

For example, the bend frequency (or number of turns) of the serpentine pattern of the strand that forms the heater layer 61 may differ from that shown in Fig. 3. The number of the first, second, and third air vents 13, 14, and 15 may differ from those of the abovementioned embodiments. While the stage 21, first electrode layer 31, second electrode layer 41, and ceramic layer 50 of the above embodiments are square in plan view, their shapes are not limited to a square.

While the stage 21 of the embodiment shown in Fig. 2 has a two-layer structure, the layer structure of the stage 21 is not limited to such a two-layer structure. For instance, the stage 21 may have a three-layer structure in which a SiO₂ layer, a SiNₓ layer, and a SiO₂ layer are deposited in that order.

The disclosure also includes the following clauses:
1. A method for fabricating a thin film device, comprising
   a step of forming a structure by forming a laminate structure above a substrate, the laminate structure comprising a first electrode layer, a ceramic layer, a second electrode layer, an insulating layer, and a heater layer in the order described, and
   a step of forming a bridge structure by removing an unnecessary portion from the structure, the bridge structure comprising a stage supporting the laminate structure and at least one bridge extending from the periphery of the stage.
2. The method of clause 1, wherein the step of forming the structure comprises
   a substep of forming the first electrode layer above the substrate,
   a substep of forming the ceramic layer above the first electrode layer,
   a substep of forming the second electrode layer above the ceramic layer,
   a substep of forming the insulating layer above the second electrode layer, and
   a substep of forming the heater layer above the insulating layer.
3. The method of clause 2, wherein the substep of forming the first electrode layer comprises forming at least one first wire extending from the periphery of the first electrode layer, and
   the heater layer is formed in a manner that the first electrode layer and the first wire have no level differences in their thickness direction.
4. The method of clause 2 or 3, wherein the heater layer is formed by lift-off patterning.
5. The method of clause 4, wherein the substep of forming the heater layer comprises forming a heater wire extending from the periphery of the heater layer and a wire bonding pad connected to the heater layer via the heater wire, and
   a mask complementary to the shape of the heater layer, the heater wire, and the wire bonding pad is formed on the entire area of the insulating layer by patterning, and the heater layer is formed by thin film deposition with the mask on the substrate.
6. The method of any one of clauses 2 to 5, wherein the substep of forming the heater layer is followed by heat treatment, and
   the heat treatment is at a temperature lower than the crystallization temperature of the ceramic constituting the ceramic layer.
7. The method of clause 6, wherein the step of forming a structure further comprises heat treatment after the substep of forming the second electrode layer and before the substep of forming the insulating layer.
8. The method of any one of clauses 1 to 7, wherein the ceramic layer is a solid electrolyte layer.
9. A thin film device comprising a bridge structure,
   the bridge structure comprising a stage and at least one bridge extending from the periphery of the stage, and
   the thin film device further comprising a first electrode layer, a ceramic layer, a second electrode layer, an insulating layer, and a heater layer formed in the order described above the stage.
10. The thin film device of clause 9, wherein the ceramic layer is a solid electrolyte layer.
11. The thin film device of clause 9 or 10, further comprising at least one first wire extending from the periphery of the first electrode layer, and
   the first electrode layer and the first wire having no level differences in their thickness direction.
12. The thin film device of any one of clauses 9 to 11, wherein the heater layer comprises a single strand extending in a serpentine pattern alternating in two opposite directions without self-intersecting.
13. The thin film device of any one of clauses 9 to 12, wherein the heater layer has a minimum cross-sectional area of 1 to 200 µm².
14. The thin film device of any one of clauses 9 to 13, wherein the ceramic layer has ionic conductivity,
   the thin film device comprises a first electrode structure and a second electrode structure,
   the first electrode structure comprises the first electrode layer and at least one first wire extending from the periphery of the first electrode layer,
   the second electrode structure comprises the second electrode layer and at least one second wire extending from the periphery of the second electrode layer, and
   one of the first electrode structure and the second electrode structure comprises a porous material in at least a part thereof, and has only one gas diffusion path, and
   the minimum cross-sectional area of the one of the electrode structures, taken perpendicular to the gas diffusion direction of the gas diffusion path, is designated Sr, and the plan-view area of the overlap between the first electrode layer and the second electrode layer is designated Sp, the ratio of Sr to Sp is 1.0 × 10⁻⁷ to 6.9 × 10⁻⁴.
15. The thin film device of any one of clauses 9 to 14, wherein the ceramic layer has ionic conductivity,
   the thin film device comprises a first electrode structure and a second electrode structure,
   the first electrode structure comprises the first electrode layer and at least one first wire extending from the periphery of the first electrode layer,
   the second electrode structure comprises the second electrode layer and at least one second wire extending from the periphery of the second electrode layer,
   one of the first electrode structure and the second electrode structure comprises a porous material in at least a part thereof, and has a plurality of gas diffusion paths, and
   the minimum cross-sectional area of the one of the electrode structures, taken perpendicular to the gas diffusion direction of each gas diffusion path, is designated Sr, and the sum of the minimum cross-sectional areas Sr of the plurality of gas diffusion paths is designated ΣSr, the plan-view area of the overlap between the first electrode layer and the second electrode layer is designated Sp, and the ratio of ΣSr to Sp, ΣSr/Sp, is 1.0 × 10⁻⁷ to 6.9 × 10⁻⁴.
16. The thin film device of clause 14 or 15, wherein the cross-sectional shape of the gas diffusion path, taken at a position with the minimum cross-sectional area Sr along the thickness direction of the gas diffusion path, is trapezoidal or rectangular.
17. The thin film device of any one of clauses 14 to 16, wherein the one of the first electrode structure and the second electrode structure comprises a metal oxide and has a porosity ρ₀ of 1.0% to 50%.
18. The thin film device of clause 17, wherein a proportion of the metal oxide in the one of the first electrode structure and the second electrode structure ranges from 1.0 vol% to 60 vol%.
19. The thin film device of any one of clauses 9 to 18, wherein the first electrode layer has a plan-view shape having a circular or polygonal portion.

### Industrial Applicability

The present invention provides a highly reliable thin film device in which a solid electrolyte layer and an electrode layer are prevented from cracking and a method for fabricating the same.

## Claims

1. A method for fabricating a thin film device, comprising
- a step of forming a structure by forming a laminate structure above a substrate, the laminate structure comprising a first electrode layer, a ceramic layer, a second electrode layer, an insulating layer, and a heater layer in the order described, and
- a step of forming a bridge structure by removing an unnecessary portion from the structure, the bridge structure comprising a stage supporting the laminate structure and at least one bridge extending from the periphery of the stage.

2. The method according to claim 1, wherein the step of forming the structure comprises :
- a substep of forming the first electrode layer above the substrate,
- a substep of forming the ceramic layer above the first electrode layer,
- a substep of forming the second electrode layer above the ceramic layer,
- a substep of forming the insulating layer above the second electrode layer, and
- a substep of forming the heater layer above the insulating layer.

3. The method according to claim 2, wherein the substep of forming the first electrode layer comprises forming at least one first wire extending from the periphery of the first electrode layer, andthe heater layer is formed in a manner that the first electrode layer and the first wire have no level differences in their thickness direction.

4. The method of claim 2 or 3, wherein the heater layer is formed by lift-off patterning.

5. The method according to claim 4, wherein the substep of forming the heater layer comprises forming a heater wire extending from the periphery of the heater layer and a wire bonding pad connected to the heater layer via the heater wire, and
a mask complementary to the shape of the heater layer, the heater wire, and the wire bonding pad is formed on the entire area of the insulating layer by patterning, and the heater layer is formed by thin film deposition with the mask on the insulating layer.

6. The method according to claim 2 or 3, wherein the substep of forming the heater layer is followed by heat treatment, and
the heat treatment is at a temperature lower than the crystallization temperature of the ceramic constituting the ceramic layer.

7. The method according to claim 6, wherein the step of forming a structure further comprises heat treatment after the substep of forming the second electrode layer and before the substep of forming the insulating layer.

8. The method according to claim 1 or 2, wherein the ceramic layer is a solid electrolyte layer.

9. A thin film device comprising a bridge structure, the bridge structure comprising a stage and at least one bridge extending from the periphery of the stage, and
the thin film device further comprising a first electrode layer, a ceramic layer, a second electrode layer, an insulating layer, and a heater layer formed in the order described above the stage.

10. The thin film device according to claim 9, wherein the ceramic layer is a solid electrolyte layer.

11. The thin film device of claim 9 or 10, further comprising at least one first wire extending from the periphery of the first electrode layer, and
the first electrode layer and the first wire having no level differences in their thickness direction.

12. The thin film device according to claim 9 or 10, wherein the heater layer comprises a single strand extending in a serpentine pattern alternating in two opposite directions without self-intersecting.

13. The thin film device according to claim 9 or 10, wherein the heater layer has a minimum cross-sectional area of 1 to 200 µm².

14. The thin film device according to claim 9, wherein the ceramic layer has ionic conductivity,
the thin film device comprises a first electrode structure and a second electrode structure,
the first electrode structure comprises the first electrode layer and at least one first wire extending from the periphery of the first electrode layer,
the second electrode structure comprises the second electrode layer and at least one second wire extending from the periphery of the second electrode layer, and one of the first electrode structure and the second electrode structure comprises a porous material in at least a part thereof, and has only one gas diffusion path, and the minimum cross-sectional area of the one of the electrode structures, taken perpendicular to the gas diffusion direction of the gas diffusion path, is designated Sr, and the plan-view area of the overlap between the first electrode layer and the second electrode layer is designated Sp, the ratio of Sr to Sp is 1.0 × 10⁻⁷ to 6.9 × 10⁻⁴.

15. The thin film device according to claim 9, wherein the ceramic layer has ionic conductivity,
the thin film device comprises a first electrode structure and a second electrode structure,
the first electrode structure comprises the first electrode layer and at least one first wire extending from the periphery of the first electrode layer,
the second electrode structure comprises the second electrode layer and at least one second wire extending from the periphery of the second electrode layer,
one of the first electrode structure and the second electrode structure comprises a porous material in at least a part thereof, and has a plurality of gas diffusion paths, and
the minimum cross-sectional area of the one of the electrode structures, taken perpendicular to the gas diffusion direction of each gas diffusion path, is designated Sr, and the sum of the minimum cross-sectional areas Sr of the plurality of gas diffusion paths is designated ΣSr, the plan-view area of the overlap between the first electrode layer and the second electrode layer is designated Sp, and the ratio of ΣSr to Sp, ΣSr/Sp, is 1.0 × 10⁻⁷ to 6.9 × 10⁻⁴.

16. The thin film device according to claim 14 or 15, wherein the cross-sectional shape of the gas diffusion path, taken at a position with the minimum cross-sectional area Sr along the thickness direction of the gas diffusion path, is trapezoidal or rectangular.

17. The thin film device according to claim 14 or 15, wherein the one of the first electrode structure and the second electrode structure comprises a metal oxide, and has a porosity ρ₀ of 1.0% to 50%.

18. The thin film device according to claim 17, wherein a proportion of the metal oxide in the one of the first electrode structure and the second electrode structure ranges from 1.0 vol% to 60 vol%.

19. The thin film device according to claim 9 or 10, wherein the first electrode layer has a plan-view shape having a circular or polygonal portion.
